# EUROPEAN PATENT APPLICATION

(11) **EP 3 287 233 A1**
(43) Date of publication of application: **28.02.2018**
(21) Application number: 17187616.2
(22) Date of filing: 24.08.2017
(51) Int. Cl.: B23Q 16/10

(54) **CLAMP DEVICE OF INDEXING APPARATUS**

(30) Priority: 26.08.2016 JP 2016165759
(71) Applicant: Tsudakoma Kogyo Kabushiki Kaisha, Kanazawa-shi, Ishikawa-ken 921-8650 (JP)
(72) Inventor: ISHIZAKI, Junichiro, ISHIKAWA-KEN, 921-8650 (JP); IKEDA, Yohei, ISHIKAWA-KEN, 921-8650 (JP)
(74) Representative: Eisenführ Speiser

(57) **Abstract**

Provided is a clamp device (60) of an indexing apparatus (1) that indexes a main shaft (20), which is rotatably supported in an accommodation hole (13) of a frame (10) via a bearing (30), to a set angular position by rotating the main shaft (20) by using a driving device (50). The clamp device (60) includes a working channel (90) that connects an air supply device (70), which supplies compressed air, to a pressure chamber (65) in the clamp device (60). The clamp device (60) operates to retain an angular position of the main shaft (20) when compressed air is supplied from the air supply device (70). The clamp device (60) includes a pressure transmitting portion (80) that is interposed in the working channel (90) and in which a piston (82) is slidably disposed. A portion of the working channel (90) on the pressure chamber (65) side of the piston (82) in the pressure transmitting portion (80) is filled with an incompressible fluid.

## Description

### BACKGROUND OF THE INVENTION

### 1. Field of the Invention

The present invention is based on and relates to a clamp device of an indexing apparatus that indexes a main shaft, which is rotatably supported in an accommodation hole of a frame via a bearing, to a set angular position by rotating the main shaft by using a driving device, the clamp device including a working channel that connects an air supply device, which supplies compressed air, to a pressure chamber in the clamp device, the clamp device operating to retain an angular position of the main shaft when compressed air is supplied from the air supply device.

### 2. Description of the Related Art

Examples of an indexing apparatus used for a machine tool include a rotary table apparatus that rotatably accommodates a main shaft, to whose one end a disc-shaped table for placing a workpiece is fixed, in an accommodation hole of a frame via a bearing. The rotary table apparatus indexes the main shaft (table) to a predetermined angular position by rotating the main shaft by using a drive device including a drive motor as a drive source. Such an indexing apparatus that indexes the angular position of a main shaft is not limited to a rotary table apparatus. Another example of the indexing apparatus is a support head described in, for example, Domestic Re-publication of PCT International Publication for Patent Application No. WO2008/050747 (Patent Document 1). The support head (referred to as a "second support head" in Patent Document 1) is used in a multitasking machining apparatus, such as a multi-axis machining apparatus or a multi-face machining apparatus, and supports a spindle head (referred to as a "first support head" in Patent Document 1) to which a spindle unit, for holding a tool, is attached.

Such an indexing apparatus includes a clamp device for retaining the main shaft at an angular position (fixing the angular position) indexed by using the driving device as described above.

Examples of a clamp device of the indexing apparatus include a so-called disc-type clamp device that is used in a rotary table apparatus described in Japanese Unexamined Patent Application Publication No. 2004-074328 (Patent Document 2). The disc-type clamp device includes a clamp disc that is fixed to a main shaft and a clamp piston as a clamp member accommodated in an accommodation groove in a frame so as to be slidable in the axial direction of the main shaft. By supplying a working fluid to a pressure chamber formed by the accommodation groove and the clamp piston and moving the clamp piston by using the pressure of the working fluid, the clamp device retains the main shaft at an indexed angular position by clamping the clamp disc between the clamp piston and the frame. The clamp device described in Patent Document 2 uses compressed air as a working fluid. The clamp device is structured so that compressed air is supplied from the air supply device to the pressure chamber through a working channel that connects an air supply device, which supplies compressed air, to the pressure chamber. Some disc-type clamp devices use pressure oil as a working fluid.

Examples of a clamp device include, in addition to the disc-type clamp device described above, a so-called sleeve-type clamp device, which is used in the indexing apparatus described in Patent Document 1. The sleeve-type clamp device includes a clamp sleeve as a clamp member. The clamp sleeve has a cylindrical shape and has an annular groove formed around the entire circumference, and a portion of the clamp sleeve corresponding to the annular groove is formed as a deformable thin portion. The sleeve-type clamp device has a pressure chamber formed by the annular groove of the clamp sleeve and the frame (housing) or a portion integrally formed with the frame. When a working fluid is supplied to the pressure chamber, the thin portion deforms in such a way that the thin portion protrudes in the radial direction of the main shaft. Thus, the sleeve-type clamp device applies a clamping force to the main shaft, which faces the thin portion, in the radial direction. In general, sleeve-type clamp devices use pressure oil as a working fluid.

In general, factories in which a machine tool including the aforementioned indexing apparatus is installed are equipped with an air supply device that compresses air and supplies the compressed air. Therefore, if a clamp device of the indexing apparatus the aforementioned disc-type clamp device and a working fluid supplied to the clamp device to move the clamp piston is compressed air, it is not necessary to use an additional device for supplying the working fluid. Accordingly, there has been increasing demand for clamp devices that use compressed air as a working fluid.

However, a clamp device that uses compressed air as a working fluid has a problem in that, regarding a clamped state in which the clamp device unrotatably retains the main shaft and an unclamped state in which the clamp device does not apply rotational resistance to the main shaft, it takes time to switch from the unclamped state to the clamped state.

To be specific, in the case of a clamp device that uses compressed air as a working fluid (pneumatic clamp device), because air is a compressible fluid, the pressure of air in the pressure chamber gradually increases as the air is supplied, the clamp piston starts moving when the pressure has increased to a certain degree, and then the clamped state is realized as the pressure increases further. In other words, with the clamp device, the clamp piston does not immediately start moving when supply of compressed air is started but starts moving only after the pressure has increased, and then the clamped state is realized. Accordingly, with the clamp device, there is a time lag between the time when supply of compressed air is started to the time when the clamp piston starts moving. As result, it takes time to realize the clamped state. If it takes time to realize the clamped state in this way, waiting time from the time when the angular position of the main shaft is indexed by the driving device to the time when actual machining is enabled (the clamped state is realized) occurs, and the machining time (lead time) of the machine tool is increased.

On the other hand, in the case of a clamp device (hydraulic clamp device) that uses pressure oil as a working fluid, because oil is an incompressible fluid, the clamp piston starts moving as soon as the pressure oil is supplied. That is, there is no time lag between the time when supply of the working fluid is started and the time when the clamp piston starts moving, in contrast to the case where compressed air is used as a working fluid. As a result, the time required to realize the clamped state is shorter than that of the pneumatic clamp device. Accordingly, when the hydraulic clamp device is used as a clamp device of an indexing apparatus of a machine tool, lead time is reduced as compared with the case where the pneumatic clamp device is used.

However, in general, the factories are not equipped with a hydraulic device for supplying pressure oil to the hydraulic clamp device, although the factories are generally equipped with an air supply device as described above. Therefore, in the case where pressure oil is used as a working fluid supplied to the clamp device, it is necessary to provide the hydraulic device to each machine tool, and therefore equipment cost is increased.

### SUMMARY OF THE INVENTION

To address the problem described above, an object of the present invention is to provide a structure of a clamp device of an indexing apparatus, the clamp device retaining a main shaft at an indexed angular position when a working fluid is supplied, the structure being capable of suppressing an increase of equipment cost and reducing time required to realize a clamped state of the main shaft.

To achieve the object, a clamp device of an indexing apparatus according to the present invention, which is based on the aforementioned clamp device, includes a pressure transmitting portion that is interposed in the working channel and in which a piston is slidably disposed, and a portion of the working channel on the pressure chamber side of the piston in the pressure transmitting portion is filled with an incompressible fluid.

A device that supplies a working fluid to the clamp device of an indexing apparatus according to the present invention is the aforementioned air supply device. The pressure transmitting portion, in which the piston is slidably disposed, is interposed in the working channel. Since the pressure transmitting portion is disposed in this way, the working channel is divided by the piston into a downstream portion on the pressure chamber side and an upstream portion on the air supply device side. In the clamp device, the upstream portion of the working channel is connected to the air supply device, and compressed air is supplied to the upstream portion in the same way as in an existing clamp device that uses compressed air as a working fluid. However, the downstream portion of the working channel, which communicates with the pressure chamber, is filled with an incompressible fluid (pressure oil or the like). Accordingly, in the clamp device according to the present invention having such a structure, as compressed air is supplied to the upstream portion, the piston becomes displaced toward the downstream portion due to the pressure of the compressed air. As a result, the piston applies a pressing force to the clamp member via the incompressible fluid in the downstream portion, and thereby the clamped state of the main shaft is realized.

In general, a clamp device on which the present invention is based is structured in such a way that the cross-sectional area of a pressure-receiving surface where the clamp member receives the pressing force due to the pressure of a working fluid is considerably larger than the cross-sectional area of the working channel for supplying the working fluid to the pressure chamber.

A clamp device to which an air supply device supplies a working fluid realizes a clamped state by making the pressure of air in an existence region, which is a region in which the working fluid exits between the air supply device and the clamp device, to be a pressure (clamp pressure) that can realize the clamped state of the main shaft. The aforementioned pneumatic clamp device that moves the clamp member by using only compressed air has a structure such that the entirety of the existence region is filled with air. Therefore, it is necessary to increase the pressure of air in the entirety of the existence region to the clamp pressure in order to make the main shaft be in the clamped state. Accordingly, it takes time to realize the clamped state.

In contrast, in the clamp device according to the present invention, a section of the existence region filled with air is only a portion of the working channel on the upstream side of the piston in the pressure transmitting portion. Therefore, time required to increase the pressure of air in the existence region to the clamp pressure is considerably shorter that that of the pneumatic clamp device including a pressure chamber corresponding to a pressure-receiving surface having a large cross-sectional area in the section filled with air as described above. Moreover, in the clamp device according to the present invention, the pressure of the upstream portion is applied to the clamp member via the piston and the incompressible fluid. Therefore, as the pressure of air in the upstream portion increases, the pressing force is applied to the clamp member with almost no time lag. Accordingly, with the clamp device according to the present invention, the period from the time when supply of compressed air is started to the time when the clamped state of the main shaft is realized is considerably shorter than that of the pneumatic clamp device. As a result, lead time of a machine tool can be reduced as compared with a machine tool including an indexing apparatus using the pneumatic clamp device.

Moreover, with the clamp device according to the present invention, a device for supplying a working fluid for moving the clamp device is the air supply device as described above, and the factories are generally equipped with the air supply device as described above. Therefore, compared with a case when the pneumatic clamp device is used for an indexing apparatus of a machine tool, increase in equipment cost can be suppressed because it is not necessary to provide additional equipment for supplying a working fluid to each machine tool.

### BRIEF DESCRIPTION OF THE DRAWINGS

Fig. 1 is a front view of a clamp device of an indexing apparatus according to an embodiment of the present invention; and
Fig. 2 is a partial enlarged front view of the clamp device of the indexing apparatus according to the embodiment of the present invention.

### DESCRIPTION OF THE PREFERRED EMBODIMENTS

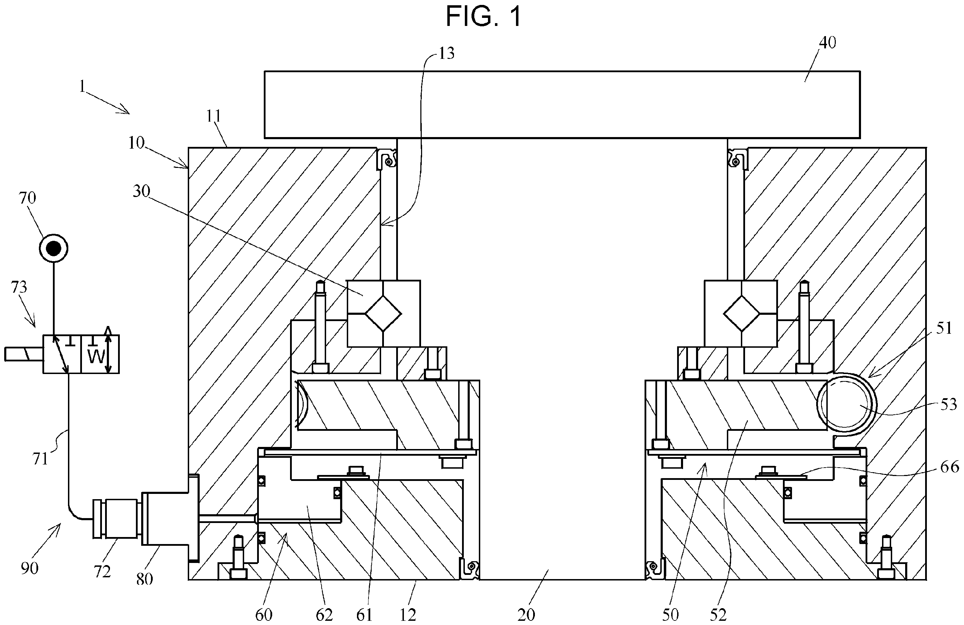

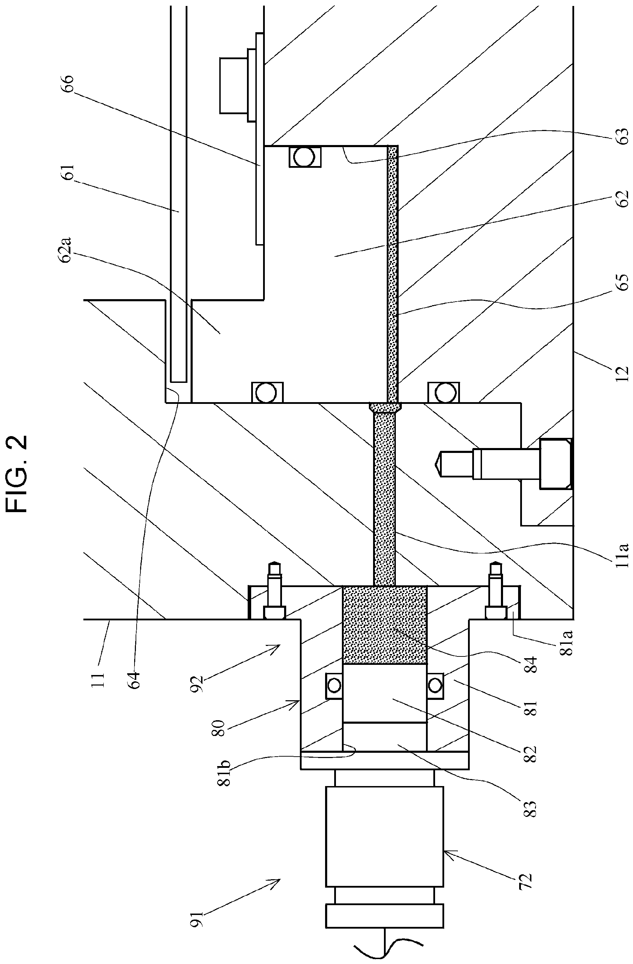

Hereinafter, an embodiment of the present invention will be described with reference to Figs. 1 and 2. The embodiment described below is an example in which the present invention is applied to the structure of a clamp device included in a rotary table apparatus as an indexing apparatus.

As illustrated in Figs. 1 and 2, a rotary table apparatus 1 includes a frame 10, which has an accommodation hole 13, and a main shaft 20. The main shaft 20 is rotatably supported by the frame 10 via a bearing 30 in the accommodation hole 13. A table 40, for placing a workpiece, is unrotatably attached to one end of the main shaft 20. The rotary table apparatus 1 includes a driving device 50, which indexes the main shaft 20 to a set angular position by rotating the main shaft 20, and a clamp device 60 for retaining the main shaft 20 at the indexed angular position. The details of the components of the rotary table apparatus 1 are as follows.

The frame 10 includes a body 11, which is a main component that occupies most part of the frame 10, and a base portion 12 attached to the body 11. To be specific, the body 11 has a through-hole into which the main shaft 20 can be inserted. The inside diameter of one end portion of the through-hole is larger than that of the other end portion of the through-hole. That is, the one end portion of the through-hole is a large-diameter portion, which has a large inside diameter.

The base portion 12 is disc-shaped and has a size such that the outer peripheral surface thereof can be fitted into the large-diameter portion of the through-hole of the body 11. The base portion 12 has a through-hole that extends through the base portion 12 in the thickness direction thereof. The through-hole has an inside diameter such that the main shaft 20 can be inserted into the through-hole. The center of the through-hole is located at the center of the base portion 12 (the center of the outer peripheral edge of the base portion 12) when the base portion 12 is seen in the thickness direction. The base portion 12 is attached to the body 11 so as to be fitted into the large-diameter portion of the through-hole of the body 11. Accordingly, the frame 10, which includes the body 11 and the base portion 12 fitted into the body 11, has the accommodation hole 13 therein. The accommodation hole 13 includes the through-hole of the body 11 and the through-hole of the base portion 12, and the main shaft 20 can be inserted into the accommodation hole 13.

As described above, the table 40, for placing a workpiece or the like, is attached to one end of the main shaft 20. The main shaft 20 is disposed in the accommodation hole 13 of the frame 10 in a direction such that the one end to which the table 40 is attached is located away from the base portion 12. The main shaft 20 is rotatably supported by the frame 10 via the bearing 30 disposed between the main shaft 20 and the body 11.

The driving device 50 includes a drive motor (not shown) as a driving source for rotating the main shaft 20, and a transmission mechanism 51, which transmits rotation of the output shaft of the drive motor to the main shaft 20. The transmission mechanism 51 includes a worm wheel 52, which is relatively unrotatably attached to the main shaft 20, and a worm spindle 53, which is rotatably supported by the frame 10 so as to mesh with the worm wheel 52. The output shaft of the drive motor is connected to the worm spindle 53 of the transmission mechanism 51. In the rotary table apparatus 1, the drive motor of the driving device 50 is controlled in accordance with a numerical control program, which has been set beforehand. Thus, the main shaft 20 is indexed to an angular position that is set in the numerical control program, and accordingly the table 40 is indexed to the angular position.

In the present embodiment, the clamp device 60 is a so-called disc-type clamp device. The clamp device 60 causes the main shaft 20 to be in a clamped state via a clamp disc 61 by clamping the clamp disc 61, which is relatively unrotatably attached to the main shaft 20, between a clamp piston 62 and a clamp surface 64 of the frame 10.

Regarding the clamp device 60, first, the base portion 12 of the frame 10 has a dimension in the thickness direction thereof such that the dimension of a radially inner part of the base portion 12 is larger than the dimension of a radially outer part of the base portion 12. That is, the radially inner part of the base portion 12 is a protruding portion that protrudes in the thickness direction. The base portion 12 is attached to the body 11 as described above in a direction such that the protruding portion faces the table 40. Accordingly, the frame 10 has an annular accommodation groove 63 therein. The annular accommodation groove 63 is defined by an inner peripheral surface of the large-diameter portion of the body 11 and an outer peripheral surface of the protruding portion of the base portion 12 with respect to the radial direction of the accommodation hole 13 (= the radial direction of the base portion 12 of the frame 10). Moreover, because the through-hole of the body 11 of the frame 10 has the large-diameter portion, the body 11 has an end surface that faces the base portion 12 and that functions as the clamp surface 64 of the clamp device 60.

The clamp piston 62 is a ring-shaped member that can be accommodated in the annular accommodation groove 63 of the frame 10. The clamp piston 62 is fitted into the accommodation groove 63 so as to be displaceable in the frame 10 in the axial direction of the main shaft 20. The clamp piston 62 includes a pressing portion 62a at an outer peripheral portion of an end surface thereof, the end surface facing the table 40 when the clamp piston 62 is accommodated in the accommodation groove 63. The pressing portion 62a protrudes in the thickness direction of the clamp piston 62. In the clamp device 60, the end surface (pressing surface) of the pressing portion 62a of the clamp piston 62 facing the table 40 and the clamp surface 64 of the frame 10 are present in the same region in the radial direction and face each other in the axial direction. The pressing surface of the clamp piston 62 and the clamp surface 64 of the frame 10 are separated from each other in the axial direction when the main shaft 20 is in an unclamped state in which the aforementioned indexing of an angular position is performed.

The clamp disc 61 is a flexible member and has a through-hole into which the main shaft 20 can be inserted. The clamp disc 61 is a disc-shaped member whose outside diameter is slightly smaller than the inside diameter of the large-diameter portion of the through-hole of the body 11 of the frame 10. In a state in which the main shaft 20 is inserted into the through-hole of the clamp disc 61 and the clamp disc 61 is disposed coaxial with the main shaft 20, the clamp disc 61 is fixed to an end surface of the worm wheel 52 facing the base portion 12 by using screw members. In a state in which the clamp disc 61 is fixed to the worm wheel 52 in this way, the clamp disc 61 is located between the clamp surface 64 of the frame 10 and the pressing surface of the clamp piston 62 in the axial direction, and an outer peripheral portion of the clamp disc 61 faces the clamp surface 64 and the pressing surface. When the clamp device 60 is in the unclamped state, the outer peripheral portion of the clamp disc 61 is slightly separated from the clamp surface 64 and the pressing surface in the axial direction.

The body 11 of the frame 10 has a communication passage 11 a, which is a tubular passage through which the accommodation groove 63 communicates with the outside of the frame 10. To be specific, the communication passage 11 a is formed in the body 11 of the frame 10 so as to communicate with a working space 65. The working space 65 is an annular space defined by the accommodation groove 63 and the clamp piston 62. The communication passage 11 a is used to supply a working fluid to the working space 65. In the clamp device 60, when the working fluid is supplied into the working space 65 through the communication passage 11 a, the clamp piston 62, which is accommodated in the accommodation groove 63, is urged by the pressure of the working fluid toward the clamp disc 61 in the axial direction. Accordingly, the working space 65 functions as a pressure chamber of the clamp device 60.

In the clamp device 60, when the working fluid is supplied to the working space 65 through the communication passage 11 a, the clamp piston 62 is urged as described above, the clamp disc 61 is clamped between the clamp piston 62 and the clamp surface 64, and the clamped state of the main shaft 20 is realized.

When changing the state of the main shaft 20 from the clamped state to the aforementioned unclamped state in order to index the angular position of the main shaft 20, in the clamp device 60, supply of the working fluid to the working space 65 is stopped and thereby the pressure of the working fluid in the working space 65 decreases. The clamp device 60 includes a return disc 66 that urges the clamp piston 62 in a direction such that the clamp piston 62 becomes separated from the clamp disc 61 in the axial direction. Therefore, as the pressure of the working fluid in the working space 65 decreases as described above, the clamp piston 62 becomes separated from the clamp disc 61, clamping of the clamp disc 61 between the clamp piston 62 and the clamp surface 64 is released, and the main shaft 20 enters the unclamped state. The return disc 66 is a flexible disc-shaped member. An inner peripheral portion of the return disc 66 is fixed to the end surface of the protruding portion of the base portion 12 of the frame 10 facing the table 40 by using screw members. An outer peripheral portion of the return disc 66 faces an inner peripheral portion of the clamp piston 62.

In the rotary table apparatus 1 having the structure described above, the clamp device 60 uses an air supply device 70, which supplies compressed air, as a supply source of the working fluid. The air supply device 70 is connected through a supply pipe 71 to the communication passage 11 a, which is formed in the body 11 of the frame 10 and communicates with the working space (pressure chamber) 65. That is, in the clamp device 60 according to the present embodiment, a working channel in the present invention includes the communication passage 11 a and the supply pipe 71, and the air supply device 70 as the supply source and the pressure chamber 65 communicate with each other through the working channel.

In the present invention, in an indexing apparatus including the rotary table apparatus 1, a clamp device of the indexing apparatus includes a pressure transmitting portion that is interposed in the working channel. In the present embodiment, the clamp device 60 includes a pressure transmitting portion 80 that is attached to the body 11 of the frame 10 so as to connect the communication passage 11 a in the body 11 to the supply pipe 71 outside the frame 10. The details of the pressure transmitting portion 80 are as follows.

The pressure transmitting portion 80 includes a cylinder portion 81 and a piston 82. The cylinder portion 81 has a cylinder hole 81 b as a through-hole therein. The piston 82 is accommodated in the cylinder hole 81 b of the cylinder portion 81 so as to be slidable in a direction in which the cylinder hole 81 b extends through the cylinder portion 81. The cylinder portion 81 of the pressure transmitting portion 80 has a flange 81 a at one end thereof. The flange 81 a is formed so that the outside diameter of the cylinder portion 81 is increased. In a state in which the flange 81 a of the cylinder portion 81 is fitted into a recess in an outer surface of the body 11 of the frame 10, the pressure transmitting portion 80 is attached to the frame 10 by screwing screw members into the body 11. The pressure transmitting portion 80 is fixed to the frame 10 at a position such that the cylinder hole 81 b of the cylinder portion 81 communicates with the communication passage 11a of the body 11.

The pressure transmitting portion 80 is connected to the supply pipe 71 via a pipe joint 72 that is attached to other end, which is opposite to the one end, of the cylinder portion 81 of the pressure transmitting portion 80. Accordingly, in the clamp device 60, the supply pipe 71 connected to the air supply device 70 and the communication passage 11 a formed in the frame 10 (the body 11) communicate with each other through the cylinder hole 81 b of the cylinder portion 81 of the pressure transmitting portion 80; and the supply pipe 71, the cylinder hole 81b, and the communication passage 11a form a working channel 90. In the clamp device 60, a channel switching valve 73, for controlling supply of compressed air as the working fluid supplied from the air supply device 70, is interposed in the supply pipe 71 of the working channel 90.

In the pressure transmitting portion 80, the cylinder hole 81 b of the cylinder portion 81 has a constant inside diameter in the direction in which the cylinder hole 81 b extends through the cylinder portion 81. Accordingly, the piston 82, which is slidably accommodated in the cylinder hole 81 b, has a constant outside diameter in the axial direction thereof. In other words, both end surfaces of the piston 82 in the axial direction have the same area.

Because the piston 82 is accommodated in the space in the cylinder hole 81 b of the cylinder portion 81, the space is divided into a space (hereinafter, referred to as an "upstream-side space") 83 on the upstream side of the piston 82 (on the air supply device 70/supply pipe 71 side) and a space (hereinafter, referred to as a "downstream-side space") 84 on the downstream side of the piston 82 (on the communication passage 11 a/pressure chamber 65 side). Accordingly, in the clamp device 60, the working channel 90 is constituted by a portion on the upstream side of the piston 82 (hereinafter, referred to as an "upstream portion") 91, which is formed by the supply pipe 71 and the upstream-side space 83, and a portion on the downstream side of the piston 82 (hereinafter, referred to as a "downstream portion") 92, which is formed by the communication passage 11 a and the downstream-side space 84. The downstream portion 92 of the working channel 90 is filled with an incompressible fluid as the working fluid. In the present embodiment, pressure oil is used as the incompressible fluid. As the downstream portion 92 of the working channel 90 is filled with the pressure oil, the pressure chamber 65 is also filled with the pressure oil.

In the clamp device 60 of the rotary table apparatus 1 according to the present embodiment, which has the structure described above, when machining a workpiece placed on the table 40, in order to clamp the main shaft 20, whose angular position has been indexed by the driving device 50 as described above, the air supply device 70 is driven so as to supply compressed air to the supply pipe 71. Thus, the compressed air is supplied to the upstream portion 91, including the supply pipe 71, of the working channel 90. Accordingly, the pressure of air in the upstream portion 91 increases, and the piston 82 becomes displaced toward the downstream side due to the pressure of compressed air in the upstream-side space 83 of the pressure transmitting portion 80.

As the piston 82 becomes displaced toward the downstream side, in the pressure transmitting portion 80, because the pressure oil in the downstream-side space 84 of the downstream portion 92 of the working channel 90 is an incompressible fluid, the pressure oil is pushed outward by the piston 82 by an amount corresponding to the amount of displacement of the piston 82 and moves toward the communication passage 11a of the downstream portion 92. As a result, a part of the pressure oil in the communication passage 11 a is pushed into the pressure chamber 65, which is connected to the downstream portion 92. Thus, the amount of pressure oil in the pressure chamber 65 increases, the clamp piston 62 becomes displaced toward the clamp disc 61 by an amount corresponding to the amount of pressure oil that has increased, the clamp piston 62 presses the clamp piston 62, and the clamped state of the main shaft 20 is realized.

In the clamped state, the pressure of compressed air in the upstream-side space 83 of the pressure transmitting portion 80 is applied to the clamp piston 62 via the piston 82, the pressure oil in the downstream portion 92 of the working channel 90, and the pressure oil in the pressure chamber 65. A pressing force that the clamp piston 62 applies to the clamp disc 61 has a magnitude such that a desired clamp force is obtained. The magnitude of the pressing force per unit area is substantially the same as the pressure that compressed air applies to the piston 82 in the upstream-side space 83 of the pressure transmitting portion 80. In other words, in the clamp device 60, by adjusting the pressure of compressed air in the upstream-side space 83 of the pressure transmitting portion 80 to a pressure (the aforementioned clamp pressure) such that a desired clamp force can be obtained, the pressure is applied to the clamp piston 62 via the piston 82 and the pressure oil, and thereby a clamped state due to the desired clamp force is realized.

Thus, the clamp device 60 according to the present embodiment of the present invention has a structure such that the working channel 90, which connects the air supply device 70 as a supply source of the working fluid to the pressure chamber 65, is divided by the pressure transmitting portion 80 (piston 82) into the upstream portion 91 and the downstream portion 92, and the air supply device 70 supplies compressed air to only the upstream portion 91. In the clamp device 60, the downstream portion 92 of the working channel 90 is filled with pressure oil, and accordingly the pressure chamber 65 is also filled with pressure oil. Because the pressure oil in the downstream portion 92 and the pressure chamber 65 is an incompressible fluid, which is not compressed when a pressure is applied, the clamp device 60 has a structure such that the pressure of compressed air in the upstream portion 91 is applied to the clamp piston 62 via the pressure oil with substantially no time lag. With such a structure, by increasing the pressure of compressed air in the upstream portion 91 to the clamp pressure, the pressure is applied to the clamp piston 62 via the pressure oil, and the clamped state is realized.

Accordingly, with the clamp device 60, the clamped state is realized by only increasing the pressure of compressed air in the upstream portion 91, which is a small-volume portion of the working channel 90, to the clamp pressure. This contrasts with the aforementioned existing pneumatic clamp device, with which it is necessary to increase the pressure of compressed air to the clamp pressure in the entirety of the exiting region (working channel + pressure chamber), in which the working fluid exists and which has a large volume, to realize the clamped state. Therefore, the period from the time when supply of compressed air from the air supply device 70 is started to the time when the clamped state of the main shaft 20 is realized is considerably shorter than that of the pneumatic clamp device. As a result, the lead time of the rotary table apparatus including the clamp device 60 is shorter than that of a rotary table apparatus including the pneumatic clamp device.

Moreover, with the clamp device 60, because the supply source of the working fluid is the air supply device 70 and the factories are generally equipped with the air supply device 70 as described above, it is not necessary to use additional equipment for supplying the working fluid, in contrast to the case where the hydraulic clamp device is used as the clamp device, and therefore increase in equipment cost can be suppressed.

Heretofore, a clamp device according to an embodiment of the present invention, which is included in a rotary table apparatus as an example of an indexing apparatus, has been described. However, the present invention is not limited to the embodiment described above, and may realized in other embodiments (modifications) as follows.
(1) Regarding a pressure transmitting portion of a clamp device, in the embodiment described above, the pressure transmitting portion 80 is attached to the outer surface of the frame 10 so as to connect the supply pipe 71, which is connected to the air supply device 70, to the communication passage 11 a formed in the frame 10 (the body 11). That is, in the embodiment described above, the pressure transmitting portion is attached to the outer surface of the frame at one end portion thereof so as to communicate with the communication passage in order to connect a communication passage, which is a portion communicating with a pressure chamber in a working channel and which is formed in a frame of the rotary table apparatus, to the supply pipe, which is a portion that communicates with an air supply device in the working channel and that is located outside of the frame. When the supply pipe is connected to the other end portion of the pressure transmission portion, the pressure transmission portion is located between the supply pipe and the communication passage.

However, in a clamp device according to the present invention, the pressure transmitting portion need not be attached to the outer surface of the frame of the rotary table apparatus as in the embodiment described above, even in the case where the pressure transmitting portion is disposed between the supply pipe and the communication passage as described above. The pressure transmitting portion may be embedded in the frame in such a way that the other end portion thereof is exposed at the outer surface of the frame, in other words, in such a way that the cylinder portion thereof forms a part of the frame (a part of the frame forms the cylinder portion).

The disposition of the pressure transmitting portion is not limited to a position between the supply pipe and the communication passage as described above, and may be any other position in the working channel. To be specific, the pressure transmitting portion may be disposed at a position that is outside of the frame of the rotary table apparatus and in the tubular passage of the supply pipe. That is, the supply pipe may be constituted by two portions that are an upstream portion that is connected to the air supply device and a downstream portion that is connected to the frame and communicates with the communication passage, and the pressure transmitting portion may be disposed so that the upstream portion and the downstream portion can communicate with each other.

The pressure transmitting portion may be disposed in a channel of the communication passage, which is formed in the frame, in such a way that the pressure transmitting portion is disposed inside the frame of the rotary table apparatus (or a part of the frame forms the cylinder portion of the pressure transmitting portion).

The pressure transmitting portion may be disposed in the frame so as to be located at the most downstream position in the working channel, that is, so as to be directly connected to the pressure chamber at a position between the communication passage and the pressure chamber. The working channel of the clamp device according to the present invention is a portion that connects the air supply device and the pressure chamber, and, as is clear from the embodiment described above, the pressure transmitting portion also forms a part of the working channel. Therefore, even in such a case where the pressure transmitting portion is disposed downstream of the communication passage (disposed between the communication passage and the pressure chamber), the pressure transmitting portion is included in a working channel according to the present invention, and, also in this case, it can be said that the pressure transmitting portion is interposed in the working channel.
(2) Regarding a piston that is disposed in a through-hole of a cylinder portion of a pressure transmitting portion, in the embodiment described above, the piston 82 is a single member whose outside diameter is constant in the axial direction. However, in a clamp device according to the present invention, the piston is not limited to such a single member and may be a combination of a plurality of members. For example, the piston may include a shaft and a disc-shaped member attached to each of two ends of the shaft.

In the embodiment described above, the outside diameter of the piston of the pressure transmitting portion is constant in the axial direction as described above. That is, both end surfaces (an end surface on the pressure chamber side (downstream-side end surface) and an end surface on the air supply device side (upstream-side end surface)) of the piston in the axial direction have the same area. However, a pressure transmitting portion according to the present invention is not limited to such a portion that both end surfaces thereof have the same area. The end surfaces may have different areas. However, in the case where the end surfaces have different areas, the areas of the end surfaces are set in consideration of the following points.

First, in a clamp device according to the present invention, as described above in the embodiment, when the piston becomes displaced toward the downstream side (toward the pressure chamber side) in the pressure transmitting portion due to air pressure, the pressure oil in the downstream-side space is pushed out from the pressure transmitting portion. As a result, the pressure oil is supplied to the pressure chamber, the clamp piston becomes displaced toward the clamp disc, and the clamped state is realized. Accordingly, the amount of pressure oil that is pushed out of the pressure transmitting portion due to the displacement of the piston is an amount that is necessary to cause the clamp piston to be displaced until the clamp piston presses the clamp disc. The amount is determined in accordance with the mechanical structure of the clamp device (the pressure-receiving area of the clamp piston, the displacement amount of the clamp piston, and the like).

The amount of pressure oil that is pushed out from the pressure transmitting portion to realize the clamped state is determined in accordance with the mechanical structure of the clamp device. Therefore, in the pressure transmitting portion, as the area of the downstream-side end surface of the piston increases, the displacement amount of the piston for realizing the clamped state decreases, and, conversely, as the area of the downstream-side end surface decreases, the displacement amount increases. That is, since the amount of pressure oil that is necessary to realize the clamped state is constant in the clamp device, the area of the downstream-side end surface of the piston and the displacement amount are inversely proportional to each other.

In the clamp device, as the area of the downstream-side end surface of the piston of the pressure transmitting portion decreases, that is, as the displacement amount of the piston increases, the time required to realize the clamped state (hereinafter, referred to as "clamp time") increases. On the other hand, as the area of the downstream-side end surface increases, for example, in the case of a structure in which the downstream-side space of the pressure transmitting portion and the pressure chamber are connected to each other through a communication passage as in the embodiment described above, the difference between the channel diameter of the communication passage and the diameter of the downstream-side space increases and flow resistance generated when pushing out the pressure oil from the downstream-side space increases. Accordingly, the clamp time increases. Therefore, the area of the downstream-side end surface of the piston of the pressure transmitting portion is set at an appropriate size that is appropriate for the clamp device in consideration of both of the effect of the displacement amount of the piston on the clamp time and the effect of the flow resistance on the clamp time.

In the embodiment described above, the upstream end surface of the piston of the pressure transmitting portion has an area that is the same as the area of downstream-side end surface that has been set as described above (hereinafter, referred to as a "reference area"). However, the upstream end surface may have an area that is larger than or smaller than the reference area.

In the case where the area of the upstream end surface of the piston is made larger than the reference area, the area is set smaller than twice the reference area. This is because, as the area of the upstream end surface of the piston increases, the volume of the upstream-side space of the pressure transmitting portion increases, and, as a result, the time required to increase the pressure of compressed air supplied to the upstream-side space to the clamp pressure increases, which is contrary to the object of the present invention.

In the case where the area of the upstream end surface of the piston is made smaller than the reference area, the area is set at a size such that the clamp piston applies to the clamp disc a pressing force that is capable of realizing the clamped state (capable of obtaining the desired clamp force) in relation to the pressure of compressed air supplied to the upstream-side space of the pressure transmitting portion. To be specific, the pressure of compressed air supplied from an air supply device equipped in factories is generally predetermined. Therefore, in the clamp device according to the present invention, the pressing force, which is obtained when the pressure of compressed air is applied to the piston, is proportional to the area of the upstream end surface of the piston. In the embodiment described above, the area of the upstream end surface is the same as the reference area as described above, and at least the desired clamp force can be obtained with the area. In the case where the area of the upstream end surface is made smaller than the reference area, naturally, it is necessary that the area be set so that the aforementioned pressing force can be obtained. The area is set on the basis of the desired clamp force that is required in the indexing apparatus (rotary table apparatus) and the pressure of compressed air supplied to the upstream-side space.
(3) Regarding a clamp device on which the present invention is based, in the embodiment described above, the clamp device is the so-called disc-type clamp device 60. However, the clamp device is not limited to a disc-type clamp device and may be a so-called sleeve-type clamp device. The clamp device may be a so-called coupling-type clamp device that unrotatably retains a main shaft by meshing a coupling member (clamp member), which is a frame-side coupling member that is disposed so as to be displaceable in the axial direction of the main shaft, with a main-shaft-side coupling member. In the case where the clamp device is of one of these types, the structure according to the present invention is applied to a working-fluid supply mechanism for deforming the clamp sleeve or for displacing the frame-side coupling member.

In the embodiment described above, the clamp device is a so-called normally-unclamping-type clamp device that realizes the clamped state by displacing a clamp member (clamp piston), which is disposed so as to be displaceable in the axial direction of the main shaft and which is normally urged in the unclamp direction, in the clamp direction by using the pressure of the working fluid. However, the clamp device on which the present invention is based may be, in a case where the clamp member is displaceable in the axial direction of the main shaft, a so-called normally-clamping-type clamp device that causes the clamp device to be in the unclamped state by displacing the clamp member, which is normally urged in the clamp direction, in the unclamp direction by using the pressure of the working fluid. In the case where the clamp device is the normally-clamping-type clamp device, the structure according to the present invention is applied to a working-fluid supply mechanism for displacing the clamp member in the unclamp direction.

The clamp device may be a clamp device of a type in which a clamp member is displaceable in the axial direction of the main shaft and displacement of the clamp member in the clamp direction and displacement of the clamp member in the unclamp direction are each performed by using the pressure of the working fluid. In the case of such a clamp device, among a supply mechanism for displacing the clamp member in the clamp direction and a supply mechanism for displacing the clamp member in the unclamp direction, the structure according to the present invention is applied to at least the former supply mechanism.

An indexing apparatus to which a clamp device according to the present invention is applied is not limited to a rotary table apparatus as in the embodiment described above and may be, for example, any of the following indexing apparatuses used in a multi-axis machine tool (multi-axis machining apparatus): an indexing apparatus (support head) that rotates a support axis, which supports a device (spindle unit) that rotates a spindle, to which a tool is fixed, around the axis thereof and thereby indexes the angular position of the spindle unit; and an indexing apparatus that rotates the support head for supporting the spindle unit around a so-called Z-axis (axis extending in the vertical direction) of a machine tool and thereby indexes the angular position of the support head.

The present invention is not limited to any of the embodiments described above, which may be modified in various ways within the spirit and scope of the present invention.

## Claims

1. A clamp device (60) of an indexing apparatus (1) that indexes a main shaft (20), which is rotatably supported in an accommodation hole (13) of a frame (10) via a bearing (30), to a set angular position by rotating the main shaft (20) by using a driving device (50), the clamp device (60) including a working channel (90) that connects an air supply device (70), which supplies compressed air, to a pressure chamber (65) in the clamp device (60), the clamp device (60) operating to retain an angular position of the main shaft (20) when compressed air is supplied from the air supply device (70),
wherein the clamp device (60) comprises a pressure transmitting portion (80) that is interposed in the working channel (90) and in which a piston (82) is slidably disposed, and
wherein a portion of the working channel (90) on the pressure chamber (65) side of the piston (82) in the pressure transmitting portion (80) is filled with an incompressible fluid.
